# EUROPEAN PATENT SPECIFICATION

(11) **EP 4 610 587 B1**
(45) Date of publication and mention of the grant of the patent: **14.01.2026**
(21) Application number: 25158428.0
(22) Date of filing: 17.02.2025
(51) Int. Cl.: F28D 20/00, F28D 20/02

(54) **HEAT STORAGE DEVICE**
WÄRMESPEICHERVORRICHTUNG
DISPOSITIF DE STOCKAGE DE CHALEUR

(30) Priority: 01.03.2024 JP 2024031450
(43) Date of publication of application: 03.09.2025
(73) Proprietor: SHINKO ELECTRIC INDUSTRIES CO., LTD., Nagano-shi, Nagano 381-2287 (JP)
(72) Inventor: MICHIWA, Kazuyoshi, NAGANO, 381-2287 (JP); NAGAI, Koji, NAGANO, 381-2287 (JP); WATANABE, Takuya, NAGANO, 381-2287 (JP)
(74) Representative: Regimbeau

(56) References cited:
- EP-A1- 4 282 930
- WO-A1-2014/086462
- DE-A1- 102010 004 358
- JP-A- 2011 038 750

## Description

### FIELD

Certain aspects of the embodiments discussed herein are related to heat storage devices.

### BACKGROUND

Heat storage devices using latent heat storages have been proposed. An example of a heat storage device is proposed in Japanese Laid-Open Patent Publication No. 2015-048393, for example. Another example correspiding to the preamble of claim 1 is known from JP 2011 038 750.

Recently, there are increased demands to improve a thermal storage efficiency.

### SUMMARY

Accordingly, it is an object in one aspect of the embodiments to provide a heat storage device which can improve the thermal storage efficiency.

According to one aspect of the embodiments, a heat storage device includes a ceramic part; and a latent heat storage part provided inside the ceramic part, wherein the ceramic part includes a first surface, a second surface opposite to the first surface, a third surface connecting the first surface and the second surface, and a first groove provided in the third surface and connected to the first surface and the second surface.

The object and advantages of the embodiments will be realized and attained by means of the elements and combinations particularly pointed out in the claims.

It is to be understood that both the foregoing general description and the following detailed description are exemplary and explanatory and not restrictive of the invention, as claimed.

### BRIEF DESCRIPTION OF THE DRAWINGS

FIG. 1A, FIG. 1B, and FIG. 1C are diagrams illustrating an example of a heat storage device according to a first embodiment;
FIG. 2 is a cross sectional view illustrating an example of a multi-heat storage device including a plurality of heat storage devices according to the first embodiment;
FIG. 3 is a perspective view illustrating an example of the heat storage device according to a second embodiment;
FIG. 4 is a perspective view illustrating an example of the heat storage device according to a third embodiment:
FIG. 5 is a cross sectional view illustrating an example of the multi-heat storage device including a plurality of heat storage devices according to the third embodiment;
FIG. 6 is a perspective view illustrating an example of the heat storage device according to a fourth embodiment;
FIG. 7A, FIG. 7B, and FIG. 7C are diagrams illustrating an example of the heat storage device according to a fifth embodiment; and
FIG. 8A and FIG. 8B are diagrams illustrating an example of the heat storage device according to a sixth embodiment.

### DESCRIPTION OF EMBODIMENTS

Preferred embodiments of the present invention will be described with reference to the accompanying drawings. In the drawings, those parts that are substantially the same are designated by the same reference numerals, and a repeated description thereof may be omitted.

### <First Embodiment>

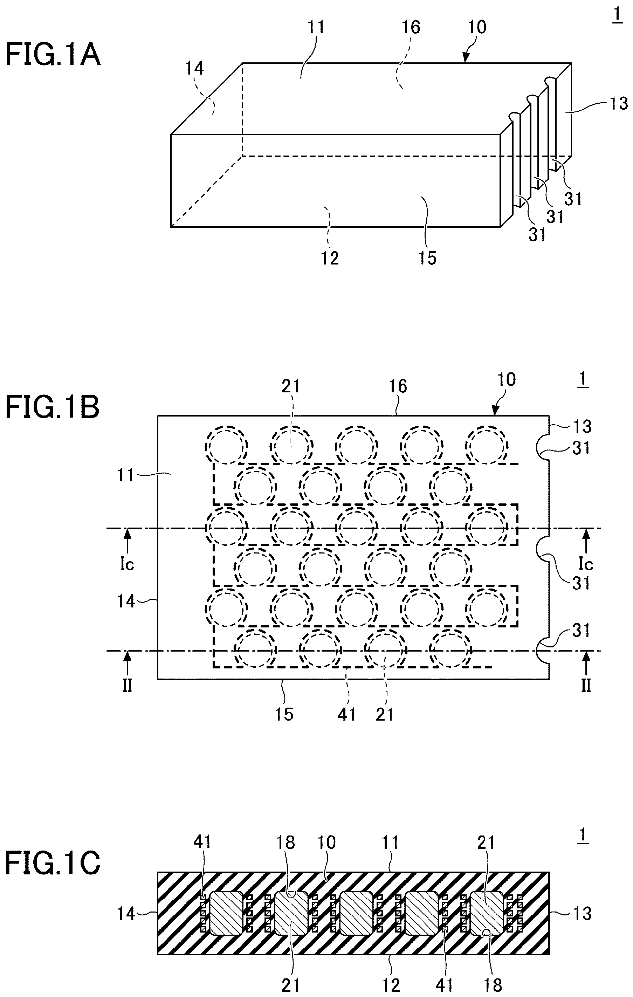

First, a first embodiment will be described. The first embodiment relates to a heat storage device. FIG. 1A, FIG. 1B, and FIG. 1C are diagrams illustrating an example of a heat storage device according to a first embodiment. FIG. 1A is a perspective view of the heat storage device, FIG. 1B is a top view of the heat storage device, and FIG. 1C is a cross sectional view of the heat storage device. FIG. 1C corresponds to a cross sectional view taken along a line Ic-Ic in FIG. 1B.

As illustrated in FIG. 1A through FIG. 1C, a heat storage device 1 according to the first embodiment includes a ceramic part 10, a latent heat storage part 21, and heating element 41. A plurality of closed spaces 18 are formed in the ceramic part 10. The ceramic part 10 is integrally formed, for example. For example, the ceramic part 10 does not have a joint connected to the closed space 18. The latent heat storage part 21 is provided inside the closed space 18. In other words, the latent heat storage part 21 is sealed inside the ceramic part 10. That is, the latent heat storage part 21 is airtightly covered with the ceramic part 10 which is a continuous body. The ceramic part 10 has a function of preventing a leakage of melted latent heat storage part 21. The latent heat storage part 21 has a columnar shape, such as a circular columnar shape or the like, for example. The latent heat storage part 21 is provided inside each of the closed spaces 18. That is, a plurality of latent heat storage parts 21 are provided inside the ceramic part 10. The latent heat storage parts 21 are arranged with long axes thereof parallel to one another. As illustrated in FIG. 1B, the plurality of latent heat storage parts 21 are densely arranged in a regular triangle lattice, for example.

The latent heat storage part 21 is formed of a metal, for example. The latent heat storage part 21 includes aluminum (Al), copper (Cu), silicon (Si), or boron (B), or an arbitrary combination of two or more of such elements, for example.

A main component of the latent heat storage part 21 may be aluminum. The latent heat storage part 21 may include aluminum at a ratio of 99 mass% or greater. That is, the latent heat storage part 21 may be composed of aluminum having a purity of 99 mass% or greater.

The main component of the latent heat storage part 21 may be copper. The latent heat storage part 21 may include copper at a ratio of 99 mass% or greater. That is, the latent heat storage part 21 may be composed of copper having a purity of 99 mass% or greater.

The main component of the latent heat storage part 21 may be silicon. The latent heat storage part 21 may include silicon at a ratio of 50 mass% or greater. The latent heat storage part 21 may be composed of silicon having a purity of 50 mass% or greater. Preferably, the latent heat storage part 21 includes silicon at a ratio of 99 mass% or greater, and is composed of silicon having a purity of 99 mass% or greater. The latent heat storage part 21 may include boron (B), aluminum (Al), bismuth (Bi), antimony (Sb), gallium (Ga), copper (Cu), iron (Fe), titanium (Ti), yttrium (Y), indium (In), zinc (Zn), tin (Sn), or an arbitrary combination of two or more of such elements at a ratio of less than 50 mass% in total.

The main component of the latent heat storage part 21 may be boron. The latent heat storage part 21 may include boron at a ratio of 50 mass% or greater. The latent heat storage part 21 may be composed of boron having a purity of 50 mass% or greater. Preferably, the latent heat storage part 21 includes 80 mass% or greater of boron, and is composed of boron having a purity of 80 mass% or greater. More preferably, the latent heat storage part 21 includes boron at a ratio of 99 mass% or greater, and is composed of boron having a purity of 99 mass% or greater. The latent heat storage part 21 may include silicon (Si), aluminum (Al), iron (Fe), copper (Cu), cobalt (Co), or any combination of two or more such elements at a ratio of less than 20 mass% in total.

In the case where the main component of the latent heat storage part 21 is aluminum, the ceramic part 10 includes aluminum oxide (Al₂O₃) at a ratio of 96 mass% or greater, for example. That is, the ceramic part 10 may be composed of aluminum oxide having a purity of 96 mass% or greater.

In the case where the main component of the latent heat storage part 21 is copper, the ceramic part 10 includes aluminum oxide at a ratio of 90 mass% or greater, or mullite (3Al₂O₃·2SiO₂) at a ratio of 90 mass% or greater, or aluminum nitride (AlN) at a ratio of 95 mass% or greater, or a mixture of aluminum nitride and boron nitride (BN) at a ratio of 95 mass% or greater. The ceramic part 10 may further include a sintering aid (or a sintering additive) or the like. Examples of the sintering aid include silicon, magnesium, calcium, or the like. Ceramic grains included in the ceramic part 10 preferably have a grain diameter (or a grain size) of approximately 1 µm or less, and more preferably approximately 0.3 µm or less.

In the case where the main component of the latent heat storage part 21 is silicon, the ceramic part 10 includes mullite, aluminum oxide (Al₂O₃), cordierite (2MgO·2Al₂O₃·5SiO₂), anorthite (CaAl₂SiO₈), sillimanite (Al₂SiO₅), silica nitride (Si₃N₄), boron nitride, aluminum nitride, a composite material (or composite ceramic) of aluminum nitride and boron nitride, silica carbide (SiC), tungsten carbide (WC), boron carbide (B₄C), molybdenum disilicide (MoSi₂), tungsten disilicide (WSi₂), or an arbitrary combination of two or more of such materials. The ceramic part 10 may be composed of mullite, aluminum oxide, cordierite, anorthite, sillimanite, silicon nitride, boron nitride, aluminum nitride, a composite material of aluminum nitride and boron nitride, silicon carbide, tungsten carbide, boron carbide, molybdenum disilicide, tungsten disilicide, or an arbitrary combination of two or more of such materials.

In the case where the main component of the latent heat storage part 21 is boron, the ceramic part 10 may be composed of boron nitride (BN), boron carbide (B₄C), aluminum nitride (AlN), a composite material of aluminum nitride and boron nitride, silicon nitride (Si₃N₄), silicon carbide (SiC), or an arbitrary combination of two or more of such materials. The ceramic part 10 may be composed of boron nitride, boron carbide, aluminum nitride, a composite material (or composite ceramic) of aluminum nitride and boron nitride, silicon nitride, silicon carbide, or an arbitrary combination of two or more of such materials.

In the case where the main component of the latent heat storage part 21 is boron, the ceramic part 10 may include a boride. The ceramic part 10 may be composed of a boride. The boride is titanium boride (TiB₂), zirconium boride (ZrB₂), hafium boride (HfB₂), vanadium boride (VB₂), niobium boride (NbB₂), tantalum boride (TaB₂), lanthanum boride (LaB₆), or any combination of two or more of such materials.

The heating element 41 is provided inside the ceramic part 10. The heating element 41 is provided between a surface of the ceramic part 10 and a surface of the latent heat storage part 21. The heating element 41 generates Joule heat when energized. The heating element 41 has a substantially cylindrical shape around each latent heat storage part 21. The heating element 41 can heat the latent heat storage part 21. In order to reduce heat loss, a distance between the heating element 41 and the latent heat storage part 21 is preferably small. The heating element 41 includes tungsten, or molybdenum, or both of tungsten and molybdenum, for example. The heating element 41 may include a mixture of tungsten and aluminum oxide, or a mixture of molybdenum and aluminum oxide. In this case, the heating element 41 may further include one or more materials selected from silicon oxide, magnesium oxide, calcium carbonate, or the like. The heat storage device 1 may include a plurality of heating elements 41.

The ceramic part 10 has a substantially hexahedral shape having surfaces 11, 12, 13, 14, 15 and 16 in the top view (or a plan view) illustrated in FIG. 1B. The surfaces 11 and 12 are parallel to each other, the surfaces 13 and 14 are parallel to each other, and the surfaces 15 and 16 are parallel to each other. That is, the surface 12 is a surface opposite to the surface 11, the surface 14 is a surface opposite to the surface 13, and the surface 16 is a surface opposite to the surface 15. The surfaces 13, 14, 15, and 16 connect (or join) the surface 11 and the surface 12. The ceramic part 10 may have a rectangular parallelepiped shape or a cubic shape in the top view. For example, the long axis of the latent heat storage part 21 is perpendicular to the surfaces 11 and 12. The surfaces 11, 12, 13, 14, 15, and 16 are examples of a first surface, a second surface, a third surface, a fourth surface, a fifth surface, and a sixth surface, respectively.

A groove 31 is formed in the surface 13. A plurality of grooves 31 may be formed in the surface 13. The groove 31 is connected to the surfaces 11 and 12, and the surfaces 11 and 12 have recesses associated with the groove 31. The groove 31 may be formed in a linear shape. The groove 31 is an example of a first groove.

Two terminals of the heating element 41 are provided on the surface 12. A pin having a lead wire is connected thereto is attached to each terminal, and electric power is supplied to the heating element 41 from the outside via the lead wires.

In a case where heat is to be stored in the heat storage device 1, a heat medium (or a heat transfer medium), such as air or the like, is supplied toward the heat storage device 1 substantially perpendicularly to the surfaces 11 and 12. As a result, the heat medium makes contact not only with the surface 11 or 12 but also with the surfaces 13, 14, 15, and 16, and the heat of the heat medium is transferred to the latent heat storage part 21 via the ceramic part 10. When the latent heat storage part 21 is heated to a temperature higher than a solid-liquid phase transition temperature, latent heat associated with the phase transition is stored in the latent heat storage part 21. In the present embodiment, because one or a plurality of grooves 31 are formed in the surface 13, an area of the ceramic part 10 in contact with the heat medium is larger than that of a case where the groove 31 is not formed. For this reason, a heat storage efficiency can be improved.

Further, it is possible to use not only the heating medium, but also the electric power. In this case, the pins are attached to the terminals of the heating element 41, and the electric power is supplied to the heating element 41 from the lead wires to cause the heating element 41 to generate heat. The heat generated by the heating element 41 is stored in the latent heat storage part 21. Accordingly, the electric power applied from the outside can be converted into heat and stored in the latent heat storage part 21. For example, by generating heat from the heating element 41 by surplus electric power, the surplus electric power can be stored as heat. An energy stored in the latent heat storage part 21 can be supplied to a factory, an office, a commercial building, or the like as energy of heat, steam (pressure), or electric power (turbine power generation using steam pressure, or the like).

One or a plurality of grooves 31 may also be formed in one, two, or three (or all) of the surfaces 14, 15, and 16.

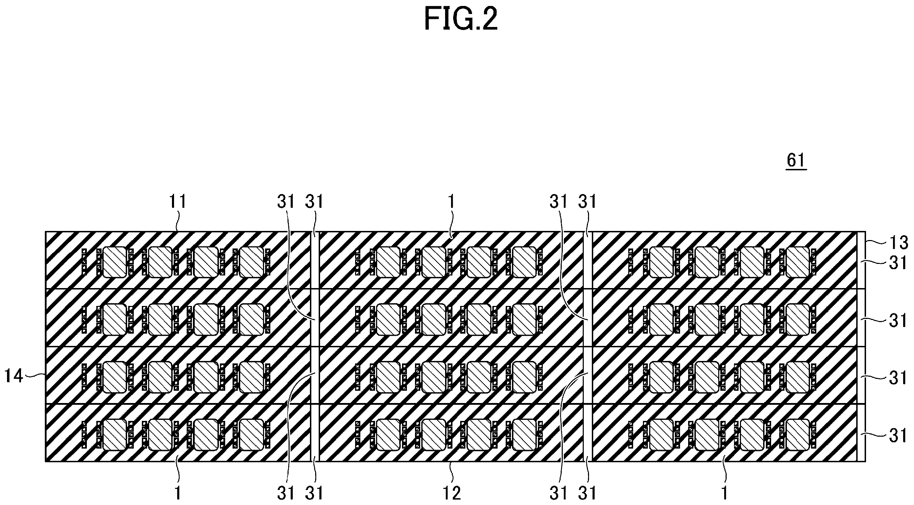

A plurality of heat storage devices 1 may be arranged in a vertical direction and a horizontal direction, that is, in a matrix. FIG. 2 is a cross sectional view illustrating an example of a multi-heat storage device having a plurality of heat storage devices according to the first embodiment. FIG. 2 illustrates a cross section of the heat storage device 1 taken along a line II-II in FIG. 1B.

A multi-heat storage device 61 illustrated in FIG. 2 includes a plurality of heat storage devices 1. The plurality of heat storage devices 1 are arranged so that one surface 13 and another surface 14 of two adjacent heat storage devices 1 in the vertical direction in FIG. 2 oppose each other, respectively. The plurality of heat storage devices 1 are also arranged so that one surface 11 and another surface 12 of two adjacent heat storage devices 1 in the horizontal direction in FIG. 2 oppose each other, respectively. In addition, the plurality of heat storage devices 1 may be arranged so that one surface 15 and another surface 16 of two adjacent heat storage devices 1 in a direction perpendicular to both the vertical direction and the horizontal direction in FIG. 2 oppose each other, respectively. Moreover, the grooves 31 are connected between the two adjacent heat storage devices 1 in the vertical direction in FIG. 2 having the surfaces 11 and 12 thereof opposing each other, respectively.

In the multi-heat storage device 61, when the heat medium is supplied toward the heat storage devices 1 substantially perpendicularly to the surfaces 11 and 12, the heat medium can flow inside the grooves 31 and make contact with the plurality of heat storage devices 1. Accordingly, even in a case where the heat included in the heat medium cannot be transferred to one heat storage device 1, the heat can be transferred to other heat storage devices 1.

### <Second Embodiment>

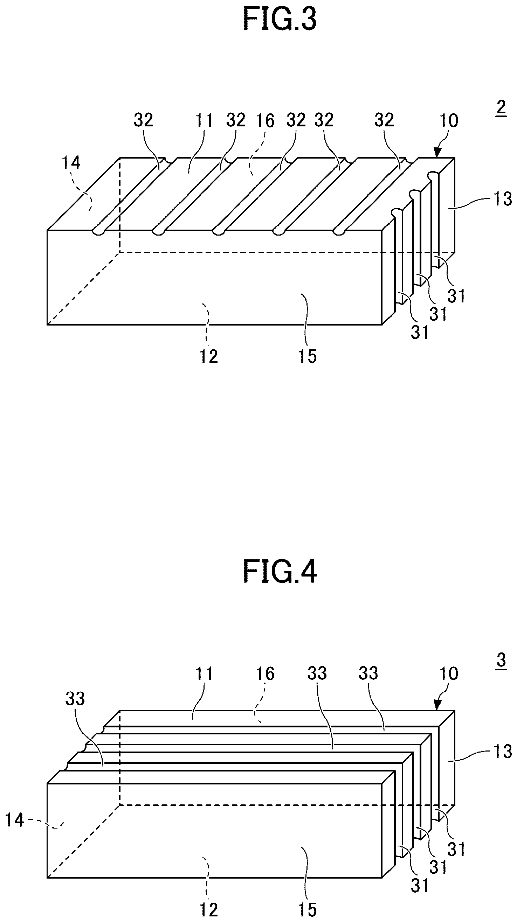

A second embodiment will be described. The second embodiment differs from the first embodiment mainly in the arrangement of the grooves. FIG. 3 is a perspective view illustrating an example of the heat storage device according to the second embodiment.

As illustrated in FIG. 3, in a heat storage device 2 according to the second embodiment, a groove 32 is formed in the surface 11. A plurality of grooves 32 may be formed in the surface 11. The groove 32 is connected to the surfaces 15 and 16, and the surfaces 15 and 16 have recesses associated with the groove 32. The groove 32 may be formed in a linear shape. The groove 32 is an example of a second groove.

Otherwise, the configuration of the second embodiment is the same as the configuration of the first embodiment.

The second embodiment can also obtain advantageous features or effects that are the same as those obtainable by the first embodiment. Further, because one or a plurality of grooves 32 are formed in the surface 11, even in the case where the heat medium is supplied toward the heat storage device 1 substantially perpendicularly to the surfaces 15 and 16, the area of the ceramic part 10 in contact with the heat medium can be increased.

One or a plurality of grooves 32 may also be formed in the surface 12.

Similar to the heat storage device 1, a plurality of heat storage devices 2 may be arranged in the vertical direction and the horizontal direction, that is, in a matrix. In this case, the grooves 31 are connected between the two adjacent heat storage devices 2 having the surfaces 11 and 12 thereof opposing each other, respectively. Moreover, the grooves 32 are connected between the two adjacent heat storage devices 2 having the surfaces 15 and 16 thereof opposing each other, respectively.

### <Third Embodiment>

A third embodiment will be described. The third embodiment differs from the second embodiment mainly in the arrangement of the grooves. FIG. 4 is a perspective view illustrating an example of the heat storage device according to the third embodiment.

As illustrated in FIG. 4, in a heat storage device 3 according to the third embodiment, a groove 33 is formed in the surface 11. A plurality of grooves 33 may be formed in the surface 11. The groove 33 is connected to the surfaces 13 and 14, and the surfaces 13 and 14 have recesses associated with the groove 33. The groove 33 may be formed in a linear shape. The groove 31 and the groove 33 may be connected to each other. The groove 33 is an example of a second groove.

Otherwise, the configuration of the third embodiment is the same as the configuration of the second embodiment.

The third embodiment can also obtain advantageous features or effects that are the same as those obtainable by the second embodiment.

One or a plurality of grooves 33 may also be formed in the surface 12.

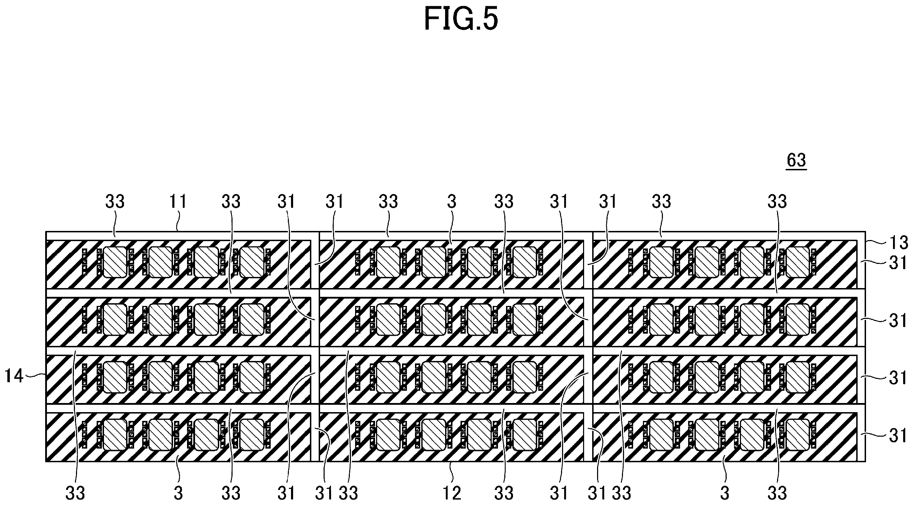

Similar to the heat storage device 1, a plurality of heat storage devices 3 may be arranged in the vertical direction and the horizontal direction, that is, in a matrix. FIG. 5 is a cross sectional view illustrating an example of the multi-heat storage device having a plurality of heat storage devices according to the third embodiment.

A multi-heat storage device 63 illustrated in FIG. 5 includes a plurality of heat storage devices 3. The plurality of heat storage devices 3 are arranged so that one surface 13 and another surface 14 of two adjacent heat storage devices 3 in the vertical direction in FIG. 5 oppose each other, respectively. The plurality of heat storage devices 3 are also arranged so that one surface 11 and another surface 12 of two adjacent heat storage devices 3 in the horizontal direction in FIG. 5 oppose each other, respectively. In addition, the plurality of heat storage devices 3 may be arranged so that one surface 15 and another surface 16 of two adjacent heat storage devices 3 in a direction perpendicular to both the vertical direction and the horizontal direction in FIG. 5 oppose each other, respectively. Moreover, the grooves 31 are connected between the two adjacent heat storage devices 3 in the vertical direction in FIG. 5 having the surfaces 11 and 12 thereof opposing each other, respectively. Further, the grooves 33 are connected between the two adjacent heat storage devices 3 in the horizontal direction in FIG. 5 having the surfaces 13 and 14 thereof opposing each other, respectively.

In the multi-heat storage device 63, when the heat medium is supplied toward the heat storage device 1 substantially perpendicularly to the surfaces 11 and 12, the heat medium can flow inside the grooves 31 and make contact with the plurality of heat storage devices 3, similar to the multi-heat storage device 61. In addition, when the heat medium is supplied toward the heat storage device 1 substantially perpendicularly to the surfaces 13 and 14, the heat medium can flow inside the grooves 33 and make contact with the plurality of heat storage devices 3. Accordingly, even in a case where the heat included in the heat medium cannot be transferred to one heat storage device 3, the heat can be transferred to other heat storage devices 3.

### <Fourth Embodiment>

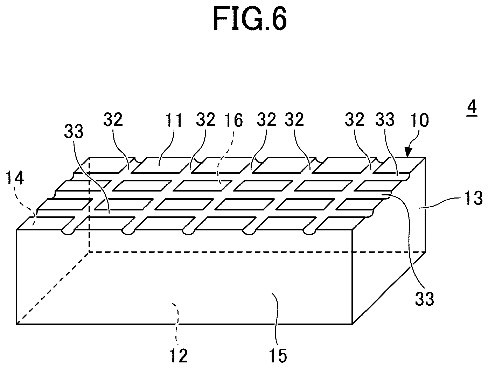

A fourth embodiment will be described. The fourth embodiment differs from the second embodiment mainly in the arrangement of the grooves. FIG. 6 is a perspective view illustrating an example of the heat storage device according to the fourth embodiment.

As illustrated in FIG. 6, in a heat storage device 4 according to the fourth embodiment, grooves 32 and 33 are formed in the surface 11. A plurality of grooves 32 and a plurality of grooves 33 may be formed in the surface 11. On the other hand, the groove 31 is not formed in the surface 13. In the present embodiment, the groove 32 is an example of a first groove, the groove 33 is an example of a third groove, the surface 15 is an example of a first surface, the surface 16 is an example of a second surface, the surface 11 is an example of a third surface, the surface 13 is an example of a fifth surface, and the surface 14 is an example of a sixth surface. From another viewpoint, the groove 33 is an example of a first groove, the groove 32 is an example of a third groove, the surface 13 is an example of a first surface, the surface 14 is an example of a second surface, the surface 11 is an example of a third surface, the surface 15 is an example of a fifth surface, and the surface 16 is an example of a sixth surface.

Otherwise, the configuration of the fourth embodiment is the same as the configuration of the second embodiment.

When heat is to be stored in the heat storage device 4, the heat medium is supplied toward the heat storage device 4 substantially perpendicularly to the surfaces 13 and 14 or substantially perpendicularly to the surfaces 15 and 16. As a result, the heat medium makes contact not only with the surface 13, or 14, or 15, or 16, but also with at least the surfaces 11 and 12, and the heat of the heat medium is transferred to the latent heat storage part 21 via the ceramic part 10. In the present embodiment, because one or a plurality of grooves 32 and 33 are formed in the surface 11, the area of the ceramic part 10 in contact with the heat medium is larger than that of a case where the groove 32 or 33 is not formed. For this reason, the heat storage efficiency can be improved.

### <Fifth Embodiment>

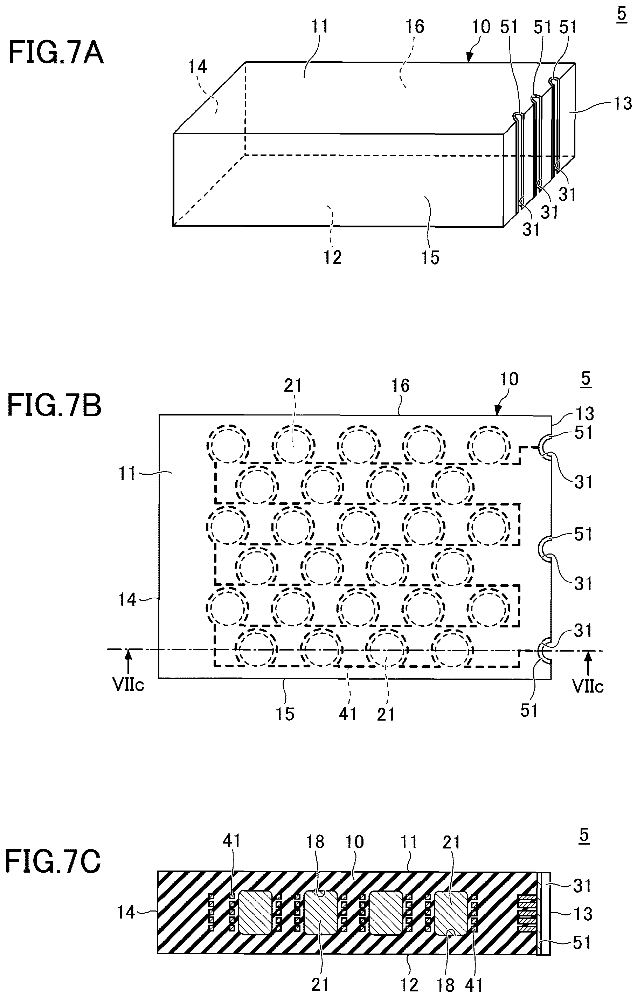

A fifth embodiment will be described. The fifth embodiment differs from the first embodiment mainly in that a metal layer is provided. FIG. 7A, FIG. 7B, and FIG. 7C are diagrams illustrating an example of the heat storage device according to a fifth embodiment. FIG. 7A is a perspective view of the heat storage device, FIG. 7B is a top view of the heat storage device, and FIG. 7C is a cross sectional view of the heat storage device. FIG. 7C corresponds to a cross sectional view taken along a line VIIc-VIIc in FIG. 7B.

As illustrated in FIG. 7A through FIG. 7C, a heat storage device 5 according to the fifth embodiment includes a metal layer 51. A plurality of grooves 31 are provided in the surface 13, and the metal layer 51 is provided inside each of the grooves 31. The metal layer 51 is a copper (Cu) layer, for example. The metal layer 51 may cover other portions of the surface 13, as long as the metal layer 51 is provided inside each groove 31.

One metal layer 51 is electrically connected to one end of the heating element 41, and another metal layer 51 is electrically connected to another end of the heating element 41, as illustrated in FIG. 7B.

Otherwise, the configuration of the fifth embodiment is the same as the configuration of the first embodiment.

The fifth embodiment can also obtain advantageous features or effects that are the same as those obtainable by the first embodiment. In addition, because the metal layer 51 is provided in the groove 31, a thermal resistance between the heat medium and the ceramic part 10 can be reduced, and it is possible to further improve the heat storage efficiency.

Moreover, the heating element 41 can be supplied with electric power from the outside through the metal layer 51. For example, by causing a power supply terminal connected to an external power source to make contact with the metal layer 51, electric power can be supplied to the heating element 41. Because the metal layer 51 is less likely to be affected by a thermal expansion and a thermal contraction of the heat storage device compared to the terminal provided on the surface 12 of the heat storage device 1, the heat storage device 5 can achieve a better long-term stability than the heat storage device 1.

The heating element 41 does not need to be connected to the metal layer 51, and the terminals of the heating element 41 may be provided on the surface 12, similar to the first embodiment.

### <Sixth Embodiment>

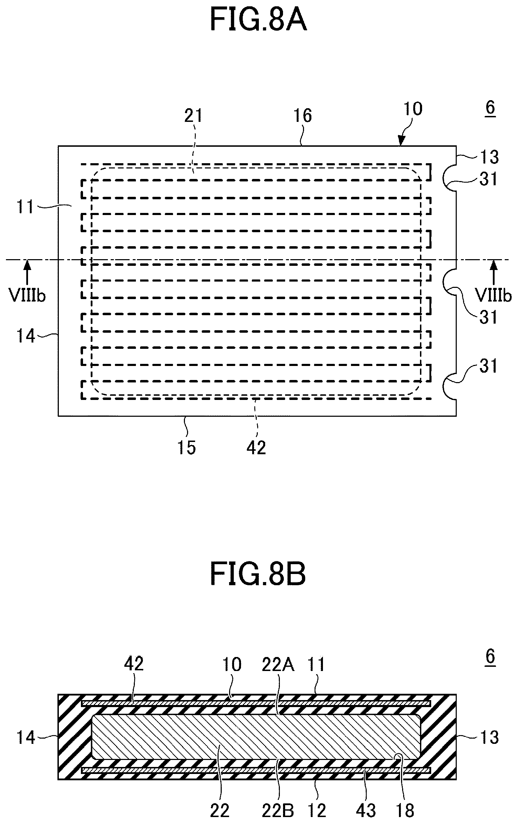

A sixth embodiment will be described. The sixth embodiment differs from the first embodiment mainly in the shapes and the arrangements of the latent heat storage part and the heating element. FIG. 8A and FIG. 8B are diagrams illustrating an example of the heat storage device according to the sixth embodiment. FIG. 8A is a top view of the heat storage device, and FIG. 8B is a cross sectional view of the heat storage device. FIG. 8B corresponds to a cross sectional view taken along a line VIIIb-VIIIb in FIG. 8A.

As illustrated in FIG. 8A and FIG. 8B, a heat storage device 6 according to the sixth embodiment includes a latent heat storage part 22 in place of the latent heat storage part 21, and includes electric heating elements 42 and 43 in place of the heating element 41.

The latent heat storage part 22 has a plate shape with two principal surfaces 22A and 22B, for example. The principal surfaces 22A and 22B are parallel to the surfaces 11 and 12. The principal surface 22A is located on a side closer to the surface 11 than to the surface 12, and the principal surface 22B is located on a side closer to the surface 12 than to the surface 11. That is, a distance between the principal surface 22A and the surface 11 is shorter than a distance between the principal surface 22B and the surface 11. The latent heat storage part 22 has a substantially rectangular shape in the top view.

The heating element 42 is provided between the principal surface 22A and the surface 11, and the heating element 43 is provided between the principal surface 22B and the surface 12. For example, the heating elements 42 and 43 are arranged in a meander shape in the top view on a plane parallel to the principal surfaces 22A and 22B. Hence, the latent heat storage part 22 is located between the heating element 42 and the heating element 43. The heating element 42 is an example of a first heating element, and the heating element 43 is an example of a second heating element.

Otherwise, the configuration of the sixth embodiment is the same as the configuration of the first embodiment.

The sixth embodiment can also obtain advantageous features or effects that are the same as those obtainable by the first embodiment. Further, when the ceramic parts 10 have the same size, a volume of the latent heat storage part 22 can easily be made larger than a total volume of the latent heat storage part 21, and a heat storage capacity can be increased.

In the sixth embodiment, the metal layer 51 may be provided inside the groove 31, similar to the fifth embodiment, and the heating elements 42 and 43 may be electrically connected to the metal layer 51.

Moreover, a plurality of latent heat storage parts 22 may be arranged inside the ceramic part 10 so that the principal surface 22A and the principal surface 22B oppose each other between adjacent latent heat storage parts 22, and a heating element similar to the heating elements 42 and 43 may be provided between adjacent latent heat storage parts 22.

Accordingly to each of the embodiments described above, it is possible to improve the thermal storage efficiency.

Although the embodiments are numbered with, for example, "first," "second," "third," "fourth," "fifth," or "sixth," the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A heat storage device (1-6) comprising:
a ceramic part (10); and
a latent heat storage part (21, 22) provided inside the ceramic part (10), wherein:
the ceramic part (10) includes:
a first surface (11, 15);
a second surface (12, 16) opposite to the first surface (11, 15);
a third surface (13, 11) connecting the first surface (11, 15) and the second surface (12, 16); the heat storage device being **characterized by**
a first groove (31, 32) provided in the third surface (13, 11) and connected to the first surface (11, 15) and the second surface (12, 16).

2. The heat storage device (5, 6) as claimed in claim 1, further comprising:
a metal layer (51) provided inside the first groove (31).

3. The heat storage device (5, 6) as claimed in claim 2, further comprising:
a heating element (41-43) provided inside the ceramic part (10) and configured to heat the latent heat storage part (21, 22),
wherein the metal layer (51) is electrically connected to the heating element (41-43).

4. The heat storage device (2-4) as claimed in any one of claims 1 to 3, wherein the ceramic part (10) includes:
a fourth surface (14) opposite to the third surface (13), and connecting the first surface (11) and the second surface (12); and
a second groove (32, 33) provided in the first surface (11) and connected to the third surface (13) and the fourth surface (14).

5. The heat storage device (3) as claimed in claim 4, wherein the first groove (31) and the second groove (33) are connected.

6. The heat storage device (4) as claimed in any one of claims 1 to 3, wherein the ceramic part (10) includes:
a fifth surface (13) connected to the third surface (11), and connecting the first surface (15) and the second surface (16);
a sixth surface (14) opposite to the fifth surface (13), connected to the third surface (11), and connecting the first surface (15) and the second surface (16); and
a third groove (33) provided in the third surface (11) and connected to the fifth surface (13) and the sixth surface (14).

7. The heat storage device (6) as claimed in claim 1, further comprising:
a first heating element (41) and a second heating element (42), provided inside the ceramic part (10), and configured to heat the latent heat storage part (22),
wherein the latent heat storage part (22) is located between the first heating element (41) and the second heating element (42).

8. The heat storage device (6) as claimed in claim 7, wherein:
the latent heat storage part (22) has a plate shape having two principal surfaces (22A, 22B), and
the first heating element (41) and the second heating element (42) are arranged on a plane parallel to the two principal surfaces (22A, 22B).

9. A multi-heat storage device (61, 63) comprising:
a plurality of heat storage devices (1-6) according to claim 1, wherein:
the ceramic part (10) includes a fourth surface (14) opposite to the third surface (13), and connecting the first surface (11) and the second surface (12), and
the plurality of heat storage devices (1-6) are arranged so that the third surface (13) and the fourth surface (14) of two adjacent heat storage devices (1-6) in a first direction oppose each other, respectively, and the first surface (11) and the second surface (12) of two adjacent heat storage devices (1-6) in a second direction perpendicular to the first direction oppose each other, respectively.

## Patentansprüche

1. Wärmespeichervorrichtung (1-6), umfassend:
ein Keramikteil (10); und
ein Teil (21, 22) zum Speichern latenter Wärme, das im Innern des Keramikteils (10) bereitgestellt wird, wobei:
das Keramikteil (10) umfasst:
eine erste Oberfläche (11, 15);
eine zweite Oberfläche (12, 16) gegenüber der ersten Oberfläche (11, 15);
eine dritte Oberfläche (13, 11), welche die erste Oberfläche (11, 15) und die zweite Oberfläche (12, 16) verbindet;
wobei die Wärmespeichervorrichtung **gekennzeichnet durch**
eine erste Rille (31, 32), die in der dritten Oberfläche (13, 11) bereitgestellt wird und mit der ersten Oberfläche (11, 15) und der zweiten Oberfläche (12, 16) verbunden ist.

2. Wärmespeichervorrichtung (5, 6) nach Anspruch 1, ferner umfassend:
eine Metallschicht (51), die im Innern der ersten Rille (31) bereitgestellt wird.

3. Wärmespeichervorrichtung (5, 6) nach Anspruch 2, ferner umfassend:
ein Heizelement (41- 43), das im Innern des Keramikteils (10) bereitgestellt wird und dazu konfiguriert ist, das Teil (21, 22) zum Speichern latenter Wärme zu erhitzen,
wobei die Metallschicht (51) mit dem Heizelement (41 bis 43) elektrisch verbunden ist.

4. Wärmespeichervorrichtung (2 bis 4) nach einem der Ansprüche 1 bis 3, wobei das Keramikteil (10) umfasst:
eine vierte Oberfläche (14) gegenüber der dritten Oberfläche (13), welche die erste Oberfläche (11) und die zweite Oberfläche (12) verbindet; und
eine zweite Rille (32, 33), die in der ersten Oberfläche (11) bereitgestellt wird und mit der dritten Oberfläche (13) und der vierten Oberfläche (14) verbunden ist.

5. Wärmespeichervorrichtung (3) nach Anspruch 4, wobei die erste Rille (31) und die zweite Rille (33) verbunden sind.

6. Wärmespeichervorrichtung (4) nach einem der Ansprüche 1 bis 3, wobei das Keramikteil (10) umfasst:
eine fünfte Oberfläche (13), die mit der dritten Oberfläche (11) verbunden ist und die erste Oberfläche (15) und die zweite Oberfläche (16) verbindet;
eine sechste Oberfläche (14) gegenüber der fünften Oberfläche (13), die mit der dritten Oberfläche (11) verbunden ist, und die erste Oberfläche (15) und die zweite Oberfläche (16) verbindet; und
eine dritte Rille (33), die in der dritten Oberfläche (11) bereitgestellt wird und mit der fünften Oberfläche (13) und der sechsten Oberfläche (14) verbunden ist.

7. Wärmespeichervorrichtung (6) nach Anspruch 1, ferner umfassend:
ein erstes Heizelement (41) und ein zweites Heizelement (42), die im Innern des Keramikteils (10) bereitgestellt werden und dazu konfiguriert sind, das Teil (22) zum Speichern latenter Wärme zu erhitzen,
wobei sich das Teil (22) zum Speichern latenter Wärme zwischen dem ersten Heizelement (41) und dem zweiten Heizelement (42) befindet.

8. Wärmespeichervorrichtung (6) nach Anspruch 7, wobei:
das Teil (22) zum Speichern latenter Wärme eine Plattenform mit zwei Hauptflächen (22A, 22B) aufweist, und
das erste Heizelement (41) und das zweite Heizelement (42) in einer Ebene angeordnet sind, die zu den beiden Hauptflächen (22A, 22B) parallel ist.

9. Mehrfach-Wärmespeichervorrichtung (61, 63), umfassend:
eine Vielzahl von Wärmespeichervorrichtungen (1-6) nach Anspruch 1, wobei:
das Keramikteil (10) eine vierte Oberfläche (14) gegenüber der dritten Oberfläche (13) umfasst und die erste Oberfläche (11) und die zweite Oberfläche (12) verbindet, und
die Vielzahl von Wärmespeichervorrichtungen (1- 6) derart angeordnet ist, dass sich die dritte Oberfläche (13) und die vierte Oberfläche (14) von zwei angrenzenden Wärmespeichervorrichtungen (1-6) in einer ersten Richtung jeweils gegenüberliegen, und sich die erste Oberfläche (11) und die zweite Oberfläche (12) von zwei angrenzenden Wärmespeichervorrichtungen (1-6) in einer zweiten Richtung, die zu der ersten Richtung rechtwinklig steht, jeweils gegenüberliegen.

## Revendications

1. Dispositif de stockage de chaleur (1-6) comprenant :
une partie en céramique (10) ; et
une partie de stockage de chaleur latente (21, 22) prévue à l'intérieur de la partie en céramique (10), dans lequel :
la partie en céramique (10) comprend :
une première surface (11, 15) ;
une deuxième surface (12, 16) opposée à la première surface (11, 15) ;
une troisième surface (13, 11) reliant la première surface (11, 15) et la deuxième surface (12, 16) ; le dispositif de stockage de chaleur étant **caractérisé par**
une première rainure (31, 32) prévue dans la troisième surface (13, 11) et reliée à la première surface (11, 15) et à la deuxième surface (12, 16).

2. Dispositif de stockage de chaleur (5, 6) selon la revendication 1, comprenant en outre :
une couche métallique (51) prévue à l'intérieur de la première rainure (31).

3. Dispositif de stockage de chaleur (5, 6) selon la revendication 2, comprenant en outre :
un élément chauffant (41-43) prévu à l'intérieur de la partie en céramique (10) et configuré pour chauffer la partie de stockage de chaleur latente (21, 22),
dans lequel la couche métallique (51) est connectée électriquement à l'élément chauffant (41-43).

4. Dispositif de stockage de chaleur (2-4) selon l'une quelconque des revendications 1 à 3, dans lequel la partie en céramique (10) comprend :
une quatrième surface (14) opposée à la troisième surface (13) et reliant la première surface (11) et la deuxième surface (12) ; et
une deuxième rainure (32, 33) prévue dans la première surface (11) et reliée à la troisième surface (13) et à la quatrième surface (14).

5. Dispositif de stockage de chaleur (3) selon la revendication 4, dans lequel la première rainure (31) et la deuxième rainure (33) sont reliées.

6. Dispositif de stockage de chaleur (4) selon l'une quelconque des revendications 1 à 3, dans lequel la partie en céramique (10) comprend :
une cinquième surface (13) reliée à la troisième surface (11) et reliant la première surface (15) et la deuxième surface (16) ;
une sixième surface (14) opposée à la cinquième surface (13), reliée à la troisième surface (11), et reliant la première surface (15) et la deuxième surface (16) ; et
une troisième rainure (33) prévue dans la troisième surface (11) et reliée à la cinquième surface (13) et à la sixième surface (14).

7. Dispositif de stockage de chaleur (6) selon la revendication 1, comprenant en outre :
un premier élément chauffant (41) et un deuxième élément chauffant (42), prévus à l'intérieur de la partie en céramique (10), et configurés pour chauffer la partie de stockage de chaleur latente (22),
dans lequel la partie de stockage de chaleur latente (22) est située entre le premier élément chauffant (41) et le deuxième élément chauffant (42).

8. Dispositif de stockage de chaleur (6) selon la revendication 7, dans lequel :
la partie de stockage de chaleur latente (22) a une forme de plaque comportant deux surfaces principales (22A, 22B), et
le premier élément chauffant (41) et le deuxième élément chauffant (42) sont disposés sur un plan parallèle aux deux surfaces principales (22A, 22B).

9. Dispositif de stockage de chaleur multiple (61, 63) comprenant :
une pluralité de dispositifs de stockage de chaleur (1-6) selon la revendication 1, dans laquelle :
la partie en céramique (10) comprend une quatrième surface (14) opposée à la troisième surface (13) et reliant la première surface (11) et la deuxième surface (12), et
la pluralité de dispositifs de stockage de chaleur (1-6) sont agencés de telle sorte que la troisième surface (13) et la quatrième surface (14) de deux dispositifs de stockage de chaleur adjacents (1-6) dans une première direction se font face, respectivement, et la première surface (11) et la deuxième surface (12) de deux dispositifs de stockage de chaleur adjacents (1-6) dans une deuxième direction perpendiculaire à la première direction se font face, respectivement.
